# EUROPEAN PATENT SPECIFICATION

(11) **EP 4 432 452 B1**
(45) Date of publication and mention of the grant of the patent: **01.04.2026**
(21) Application number: 22904451.6
(22) Date of filing: 20.10.2022
(51) Int. Cl.: H01M 50/531, B65H 35/00, B26D 5/00, B26F 1/12

(54) **NOTCHING DEVICE AND CONTROL METHOD THEREOF**
KERBUNGSVORRICHTUNG UND STEUERUNGSVERFAHREN DAFÜR
DISPOSITIF D'ENCOCHAGE ET SON PROCÉDÉ DE COMMANDE

(30) Priority: 10.12.2021 KR 20210176735
(43) Date of publication of application: 18.09.2024
(73) Proprietor: LG Energy Solution, Ltd., Seoul 07335 (KR)
(72) Inventor: CHOI, Hyeonwoo, Daejeon 34122 (KR)
(74) Representative: Plasseraud IP
(86) International application number: PCT/KR2022/016052
(87) International publication number: WO 2023/106617

(56) References cited:
- KR-A- 20210 009 031
- KR-A- 20210 112 588
- KR-A- 20210 130 541
- KR-B1- 101 342 711
- KR-B1- 102 219 019

## Description

### [Technical Field]

The present invention relates to a notching device and a controlling method thereof, and more particularly, to a notching device that can correct a distribution amount of electrode tabs to form electrode tabs at regular intervals in an electrode sheet, prevent the electrode tabs from being caught or sandwiched, and prevent the electrode sheet from being broken, and a controlling method thereof.

### [Background Art]

Generally, secondary batteries that can be charged and discharged are widely used as energy sources, auxiliary power devices, or the like for wireless mobile devices. Further, secondary batteries are attracting attention as power sources for electric vehicles (EVs), hybrid electric vehicles (HEVs), plug-in HEVs, and the like.

Such secondary batteries are manufactured in the form in which an electrode assembly is embedded in a battery case together with an electrolyte. Electrode assemblies are divided into stack type electrode assemblies, folding type electrode assemblies, stack-folding type electrode assemblies, and the like according to a manufacturing method thereof. In the case of a stack type electrode assembly or a stack-folding type electrode assembly, a unit assembly has a structure in which positive electrodes and negative electrodes are sequentially stacked with separators interposed therebetween. In order to make such an electrode assembly, positive electrodes, separators, and negative electrodes should be sequentially stacked within a specified dimensional range without deformation or bias.

For mass production of unit cells composed of positive electrodes, separators, and negative electrodes, outer dimensions of an electrode sheet should be inspected by a visual inspection unit. A process of cutting an electrode tab and a process of performing short-circuit inspection are performed as preceding processes of the visual inspection process. Since the cut electrode tab has a thin thickness and is cut by a cutting press, deformation such as bending tends to occur.

A method of correcting the deformation using a wire for preventing tab folding is used in the visual inspection process. However, when the deformation of the cut electrode tab is out of a feedable range of the electrode tab of the wire for preventing tab folding, a bending or warping phenomenon may occur at an inlet of the wire for preventing tab folding, which may cause product defects.

Meanwhile, a gap between upper and lower portions of the wire for preventing tab folding is an electrode tab feedable range, and is fixed to a predetermined length. Further, since only the deformation within the feedable range can be corrected, when an electrode tab having a deformation amount outside the feedable range of the electrode tab is fed, the deformed electrode tab may be further deformed by being blocked by the inlet of the wire for preventing tab folding. Further, when the electrode tab is caught on the wire for preventing tab folding, the electrode may be broken.

Further, when the visual inspection is performed in the state in which the deformation of the electrode tab is not corrected, a problem occurs in that measurement errors of outer dimensions of a unit cell increases. Furthermore, the process capability of electrodes may decrease, and a defect rate of the unit cell may increase.

Therefore, there is need for a unit cell inspection device capable of fundamentally solving the above problems.

The background art of the present invention is disclosed in Korean Patent Publication No. 2015-0029364 (published on March 18, 2015).

An example of notching device is described in document KR 101342711 B1. That document discloses a notching device comprising:a notching module configured to form a plurality of electrode tabs on an electrode sheet and a visual unit configured to capture images of the electrode tabs on the electrode sheet.

### [Disclosure]

### [Technical Problem]

The present invention is directed to providing a notching device that can correct a distribution amount of electrode tabs to form electrode tabs at regular intervals in an electrode sheet, prevent the electrode tabs from being caught or sandwiched, and prevent the electrode sheet from being broken, and a controlling method thereof.

### [Technical Solution]

To this end, the invention relates to a notching device according to claim 1.

The notching device after the invention may present one or more feature(s) of dependent claims 2 to 10, in any combination allowed by the claims.

The invention also relates to a notching method according to claim 11.

The method after the invention may present one or more feature(s) of dependent claims 12 to 15, in any combination allowed by the claims.

### [Advantageous Effects]

According to the present invention, since a distribution of images of electrode tabs captured by a visual unit is corrected by a visual guide unit, it is possible for a control unit to prevent a subsequent feed pitch of an electrode sheet from being changed, and as a result, it is possible to prevent an interval between the electrode tabs from being changed.

According to the present invention, since a first visual guide and a second visual guide are simultaneously moved, it is possible to prevent a width of a passage from being narrowed or widened. Therefore, it is possible to prevent deformed electrode tabs from being caught on or sandwiched by the first visual guide and the second visual guide, and it is possible to prevent the electrode sheet from being broken.

In addition to the effects described above, specific effects of the present invention will be described together while describing specific details for embodying the present invention.

### [Description of Drawings]

FIG. 1 is a schematic view illustrating a notching device according to an embodiment of the present disclosure.
FIG. 2 is a schematic view illustrating a state in which a plurality of electrode tabs are formed in an electrode sheet according to an embodiment of the present disclosure.
FIG. 3 is a graph schematically showing a distribution amount of a plurality of electrode tabs in an electrode sheet according to an embodiment of the present disclosure.
FIG. 4 is a schematic view illustrating a visual guide unit of a notching device according to an embodiment of the present disclosure.
FIG. 5 is a schematic view illustrating a state in which a visual guide unit corresponds to a plurality of electrode tabs according to an embodiment of the present disclosure.
FIG. 6 is a schematic view illustrating a state in which a plurality of electrode tabs enter a visual guide unit in an upwardly deformed state according to an embodiment of the present disclosure.
FIG. 7 is a graph schematically showing a distribution amount of the plurality of electrode tabs of FIG. 6.
FIG. 8 is a schematic view illustrating a state in which a plurality of electrode tabs enter a visual guide unit in a downwardly deformed state according to an embodiment of the present disclosure.
FIG. 9 is a graph schematically showing a distribution amount of the plurality of electrode tabs of FIG. 8.
FIG. 10 is a schematic flowchart illustrating a method of controlling a notching device according to an embodiment of the present disclosure.

### [Reference Numerals]

10: ELECTRODE SHEET
11, 12, 13, 14: ELECTRODE TAB
110: FEEDER ROLLER
120: UNWIND ROLLER
130: REWIND ROLLER
140: NOTCHING MODULE
150: VISUAL UNIT
160: DETECTION UNIT
170: VISUAL GUIDE UNIT
171: FIRST VISUAL GUIDE
172: FIRST TAPERED PORTION
175: SECOND VISUAL GUIDE
176: SECOND TAPERED PORTION
180: CONTROL UNIT
TS: ELECTRODE TAB SET
MP: FEED PITCH
TP: TAB PITCH
TP1: FIRST TAB PITCH
TP2: SECOND TAB PITCH
TP3: THIRD TAB PITCH
TP4: FOURTH TAB PITCH
D: DISTRIBUTION AMOUNT

### [Modes of the Invention]

Hereinafter, exemplary embodiments of the present invention will be described in detail with reference to the accompanying drawings.

The present invention is not limited to embodiments to be disclosed below, is susceptible to various modifications and alternative forms, and may be implemented in various different forms. The embodiments are provided in order to fully explain the present invention and fully inform those skilled in the art of the scope of the present invention. Therefore, the present invention is not limited to the embodiments disclosed below, but it should be understood that a configuration of one embodiment and a configuration of another embodiment are substituted or added to each other, and the present invention covers all modifications, equivalents, and alternatives falling within the scope of the present invention, as defined by the claims.

The accompanying drawings are only examples to facilitate overall understanding of the embodiments disclosed herein and the technological scope disclosed in this specification is not limited to the accompanying drawings. It should be understood that the present invention covers all modifications, equivalents, and alternatives falling within the scope of the present invention, as defined by the claims. In the drawings, sizes or thicknesses of elements may be exaggerated to be large or small in consideration of convenience of understanding, etc., but due to this, the scope of the present invention should not be construed as being limited.

The terminology used herein is for the purpose of describing particular embodiments or examples only and is not intended to limit the present invention. As used herein, the singular forms "a" and "an" are intended to include the plural forms as well, unless the context clearly indicates otherwise. The terms "comprise," "comprising," "include," and/or "including," when used herein, specify the presence of stated features, integers, steps, operations, elements, parts, or combinations thereof. That is, it should be further understood that the terms "comprise," "comprising," "include," and/or "including," when used herein, do not preclude the presence or addition of one or more other features, integers, steps, operations, elements, parts, or combinations thereof.

It will be understood that, although the terms "first," "second," etc. may be used herein to describe various elements, these elements should not be limited by these terms. These terms are only used to distinguish one element from another element.

It should be understood that when a first element is referred to as being "connected" or "coupled" to a second element, the first element may be directly connected or coupled to the second element or intervening elements may be present. In contrast, it should be understood that when the first element is referred to as being "directly connected" or "directly coupled" to the second element, there are no intervening elements.

It should be understood that when a first element is referred to as being "disposed on" or "disposed under" a second element, the first element may be directly disposed on the second element or intervening elements may be present.

Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a notching device according to an embodiment of the present invention will be described.

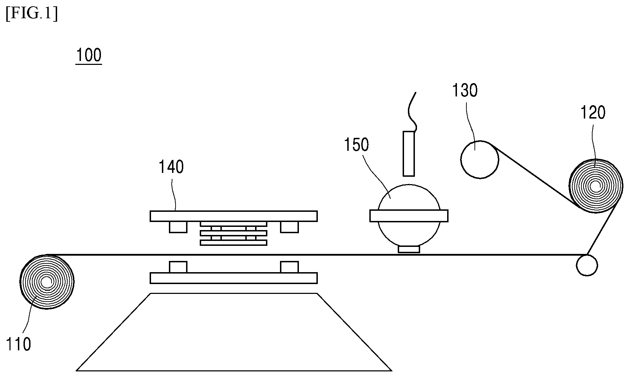

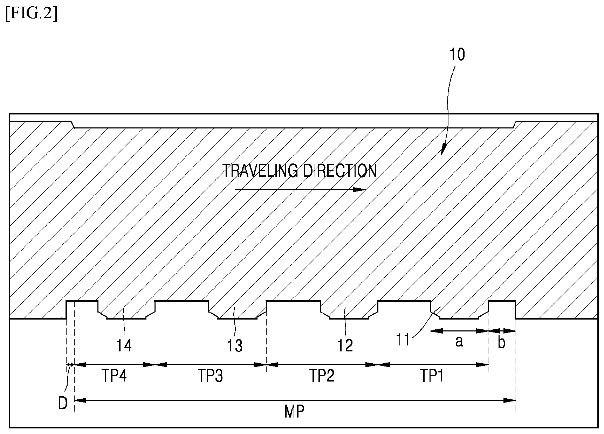

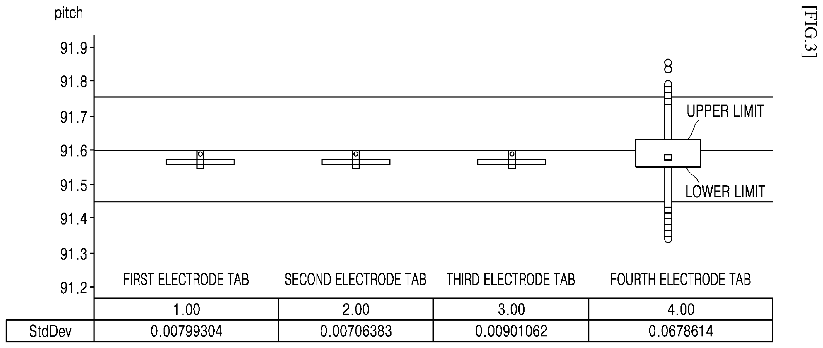

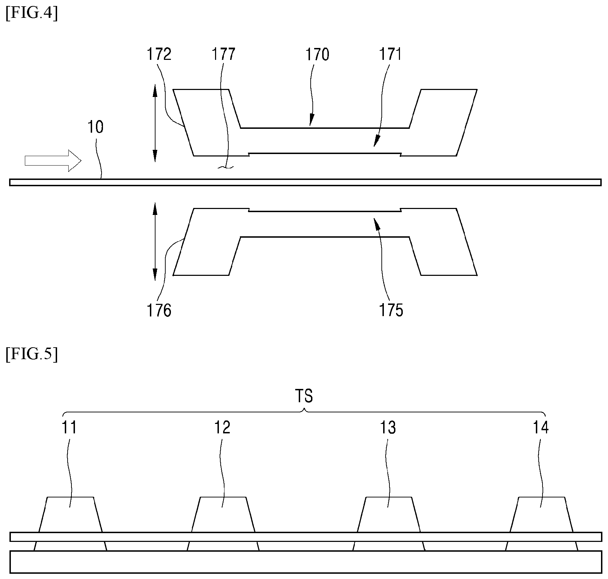

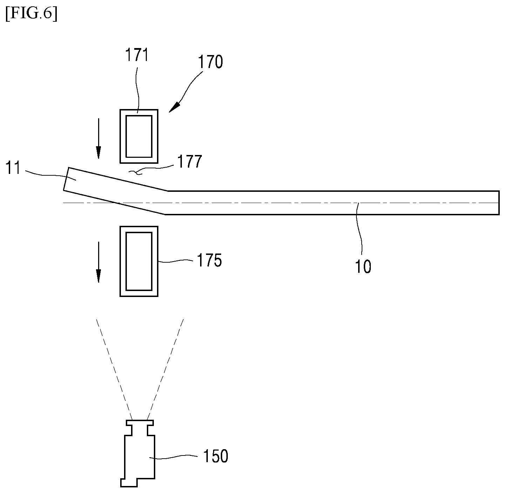

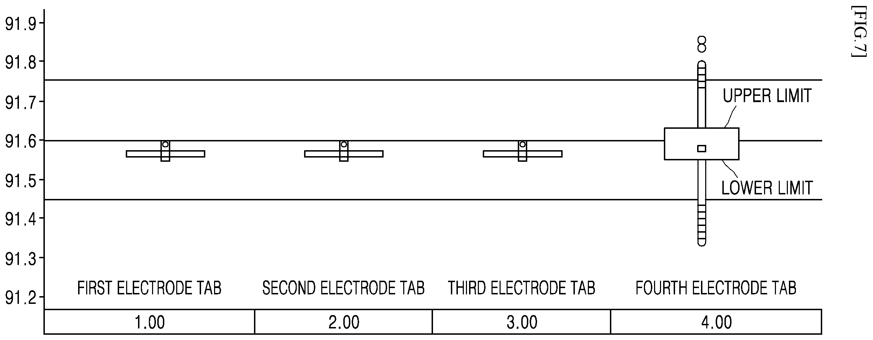

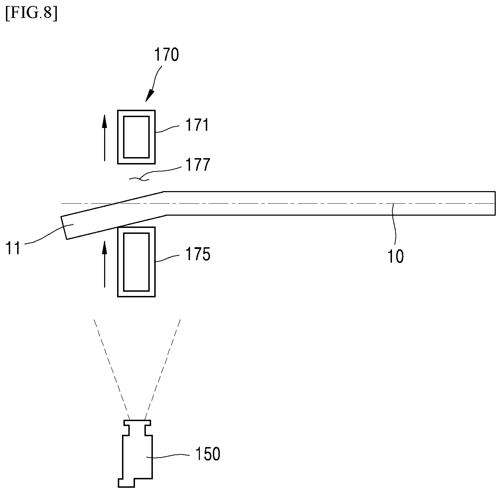

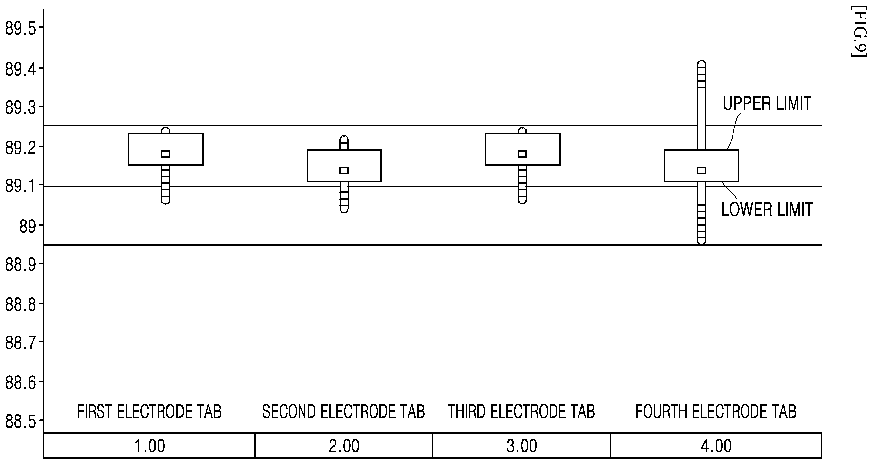

FIG. 1 is a schematic view illustrating a notching device according to the present invention, FIG. 2 is a schematic view illustrating a state in which a plurality of electrode tabs are formed in an electrode sheet according to the present invention, FIG. 3 is a graph schematically showing a distribution amount of a plurality of electrode tabs in an electrode sheet according to the present invention, FIG. 4 is a schematic view illustrating a visual guide unit of a notching device according to the present invention, FIG. 5 is a schematic view illustrating a state in which a visual guide unit corresponds to a plurality of electrode tabs according to the present invention, FIG. 6 is a schematic view illustrating a state in which a plurality of electrode tabs enter a visual guide unit in an upwardly deformed state according to the present invention, FIG. 7 is a graph schematically showing a distribution amount of the plurality of electrode tabs of FIG. 6, FIG. 8 is a schematic view illustrating a state in which a plurality of electrode tabs enter a visual guide unit in a downwardly deformed state according to the present invention, and FIG. 9 is a graph schematically showing a distribution amount of the plurality of electrode tabs of FIG. 8.

Referring to FIGS. 1 to 9, a notching device 100 according to an embodiment of the present invention includes a notching module 140, a visual unit 150, a detection unit 160, a visual guide unit 170, and a control unit 180.

A negative or positive electrode sheet 10 is wound around a feeder roller 110. The electrode sheet 10 wound around the feeder roller 110 is unwound and fed to the notching module 140. The notching module 140 cuts one side of the electrode sheet 10 in a width direction and forms a plurality of electrode tabs 11 to 14 at one time. The electrode sheet 10 in which the electrode tabs 11 to 14 are formed is continuously fed to the visual unit 150 at a line speed of 0 to 1,000 mm/s by a compensation roller, and the visual unit 150 consecutively photographs the electrode tabs 11 to 14 one by one. The electrode sheet 10 passing through the visual unit 150 is fed to a unwind roller 120. The unwind roller 120 laminates a protective film (not illustrated) on the electrode sheet 10, and the electrode sheet 10 on which the protective film is laminated is wound around a rewind roller 130. Hereinafter, the notching device 100 in which a distribution amount D of the electrode tabs 11 to 14 is corrected by the visual unit 150 will be described in detail.

For convenience of description, it is defined as follows (see FIG. 2). The electrode sheet 10 is fed as much as a length punched at one time in the notching module 140, and the feeding length is defined as a feed pitch MP. Further, intervals between adjacent electrode tabs 11 to 14 of the electrode sheet 10 are defined as tab pitches TP. Further, the plurality of electrode tabs 11 to 14 punched at one time in the notching module 140 are defined as an electrode tab set TS, and in each electrode tab set TS, intervals between the plurality of electrode tabs 11 to 14 are defined as a first tab pitch TP1, a second tab pitch TP2, a third tab pitch TP3, and a fourth tab pitch TP4 in the order of a traveling direction of the electrode sheet 10. Further, a length obtained by summing a length a of each of the electrode tabs 11 to 14 in the traveling direction and half a distance b between adjacent electrode tabs 11 to 14 is defined as a reference tab pitch TP.

The notching module 140 forms a plurality of electrode tabs 11 to 14 in the electrode sheet 10. In the notching module 140, a plurality of punches are formed at regular intervals. As the notching module 140 moves, the plurality of punches form the plurality of electrode tabs 11 to 14 at one time on one side of the electrode sheet 10 in the width direction. In this case, the electrode sheet 10 is fed to the notching module 140 at one time by the feed pitch MP. The notching module 140 forms three or more electrode tabs 11 to 14 at one time, and in FIG. 2, a case is illustrated in which the notching module 140 forms four electrode tabs 11 to 14 at one time, but the present invention is not limited thereto.

A compensation roller (not illustrated) is disposed between the notching module 140 and the visual unit 150 to adjust a feeding speed of the electrode sheet 10. The compensation roller controls the electrode sheet 10 to be fed to the visual unit 150 at a constant line speed (0 to 1,000 mm/s).

The visual unit 150 is disposed to face the plurality of electrode tabs 11 to 14 on the downstream side of the notching module 140. In this case, the visual unit 150 may be disposed above or below the electrode tabs 11 to 14. The visual unit 150 radiates the electrode tabs 11 to 14 of the electrode sheet 10 with light to consecutively capture images of the electrode tabs 11 to 14 one by one. Hereinafter, description will be made on the basis of a structure in which the visual unit 150 is disposed below the electrode tabs 11 to 14.

The detection unit 160 compares data on the plurality of electrode tabs 11 to 14 photographed by the visual unit 150 with reference data (central value) to calculate the distribution amount D of the plurality of electrode tabs 11 to 14. The reference data (central value) for the plurality of electrode tabs 11 to 14 is pre-input to the detection unit 160.

A passage 177 through which the electrode tabs 11 to 14 pass is formed in the visual guide unit 170, and the visual guide unit 170 is movably installed to press the plurality of electrode tabs 11 to 14. The passage 177 is formed to be parallel to the plane of the electrode sheet 10.

The control unit 180 controls the visual guide unit 170 to be moved to press the plurality of electrode tabs 11 to 14 to correct the distribution amount D of the plurality of electrode tabs 11 to 14. When it is determined by the control unit 180 that a distribution of the plurality of electrode tabs 11 to 14 has occurred, the control unit 180 allows the visual guide unit 170 to be moved so that the visual guide unit 170 presses the electrode tabs 11 to 14 that are bent or warp to one side to correct the electrode tabs 11 to 14 to be almost flat. In the control unit 180, a movement direction of the visual guide unit 170 is preset to correspond to the distribution amount D of the tab pitch TP, that is, the distribution amount D by comparing measurement data on the first tab pitch TP1 to the third tab pitch TP3 with the reference data (central value).

In the case in which four electrode tabs 11 to 14 are formed in the electrode sheet 10, when the electrode tabs 11 to 14 are bent or warped in each electrode tab set TS, the images of the electrode tabs 11 to 14 captured by the visual unit 150 differ from actual electrode tabs 11 to 14 in size, interval, and dimensions. As a result of the experiment of the size, interval, and dimension, when four electrode tabs 11 to 14 are formed in each electrode tab set TS, it can be seen that the first to third electrode tabs 11 to 13 are formed to have substantially a constant tab pitch TP due to a physical interval between punches, but a distribution amount D of a fourth tab pitch TP4 of the fourth electrode tab 14 is significantly increased by bending or warping of the electrode tabs 11 to 14 (see FIG. 3). Accordingly, in the present invention, the fourth tab pitch TP4 of the fourth electrode tab 14, which has the largest distribution amount, is not used as the reference data, the first tab pitch TP1, the second tab pitch TP2, and the third tab pitch TP3 are used as fixed value tab pitch data, and the visual guide unit 170 is adjusted so that the fixed value tab pitches TP1, TP2, and TP3 are positioned at the pre-input reference data (central value).

Of course, when three electrode tabs 11 to 13 are formed in each electrode tab set TS, it can be seen that the first and second electrode tabs 11 and 12 are formed to have substantially a constant tab pitch TP due to a physical interval between punches, but a distribution amount D of a third tab pitch TP3 of a third electrode tab 13 is significantly increased by bending or warping of the electrode tabs 11 to 13. Accordingly, in the present invention, the third tab pitch TP3 of the third electrode tab 13, which has the largest amount distribution, is not used as the reference data, the first tab pitch TP1 and the second tab pitch TP2 are used as fixed value tab pitch data, and the visual guide unit 170 is adjusted so that the fixed value tab pitches TP1 and TP2 are always positioned at the reference data.

Referring to FIGS. 6 and 7, when four electrode tabs 11 to 14 are bent or warped upward in the electrode sheet 10, central values of a first tab pitch TP1 to a third tab pitch TP3 are distributed close to a lower limit of a fourth tab pitch TP4. In this case, in each electrode tab set TS, the fourth tab pitch TP4 is greater than the reference tab pitch TP, and an interval between a fourth electrode tab 14 of a preceding electrode tab set TS and a first electrode tab (not illustrated) of a following electrode tab set TS is widened as much as a distribution amount D. Therefore, the control unit 180 may misjudge that a region of the following electrode tab set TS starts from a point retracted as much as the distribution amount D.

Referring to FIGS. 8 and 9, when four electrode tabs 11 to 14 are bent or warped downward in the electrode sheet 10, central values of a first tab pitch TP1 to a third tab pitch TP3 are distributed close to an upper limit of a fourth tab pitch TP4. In this case, in each electrode tab set TS, the fourth tab pitch TP4 is smaller than the reference tab pitch TP, and an interval between a fourth electrode tab 14 of a preceding electrode tab set TS and a first electrode tab (not illustrated) of a following electrode tab set TS is narrowed as much as a distribution amount D. Therefore, the control unit 180 may misjudge that a region of the following electrode tab set TS starts from a point advanced as much as the distribution amount D.

In the present invention, the visual unit 150 measures images of the deformed electrode tabs 11 to 14 and transmits the images to the detection unit 160, and data on the first tab pitch TP1 to the third tab pitch TP3 detected by the detection unit 160 serving as fixed value tab pitch data is compared with reference data (central value) to measure the distribution amount D of the electrode tabs 11 to 14. The distribution amount D of the electrode tabs 11 to 14 is corrected by moving the visual guide unit 170 upward or downward to correspond to the distribution amount D calculated by the detection unit 160. When positions of the electrode tabs 11 to 14 are corrected in this way, the images captured by the visual unit 150 may be captured close to actual electrode tabs 11 to 14 in size, interval, and dimensions. Since the distribution amount D of the images of the electrode tabs 11 to 14 captured by the visual unit 150 is corrected by the visual guide unit 170, it is possible to prevent the subsequent feed pitch MP of the electrode sheet 10 from being changed by the control unit 180, and as a result, it is possible to prevent intervals between the electrode tabs 11 to 14 from being changed.

The visual guide unit 170 includes a first visual guide 171 which is disposed on one side of the electrode tabs 11 to 14 and movably installed, and a second visual guide 175 which is disposed on the other side of the electrode tabs 11 to 14 to form the passage 177 and movably installed. In this case, the first visual guide 171 and the second visual guide 175 are moved in a vertical direction. A plurality of electrode tabs 11 to 14 are movably disposed in the passage 177. Since the first visual guide 171 and the second visual guide 175 are moved to press the plurality of electrode tabs 11 to 14, the positions of the plurality of electrode tabs 11 to 14 may be corrected.

The first visual guide 171 and the second visual guide 175 are simultaneously moved to maintain a constant width of the passage 177. In this case, the first visual guide 171 and the second visual guide 175 may be connected to one structure and moved by one driving unit (not illustrated). Further, a separate driving unit may be connected to each of the first visual guide 171 and the second visual guide 175. Since the first visual guide 171 and the second visual guide 175 are simultaneously moved, it is possible to prevent the constant width of the passage 177 from being narrowed or widened. Therefore, it is possible to prevent deformed electrode tabs 11 to 14 from being caught on or sandwiched by the first visual guide 171 and the second visual guide 175, and it is possible to prevent the electrode sheet 10 from being broken.

First tapered portions 172 are formed on both sides of the first visual guide 171, and second tapered portions 176 are formed on both sides of the second visual guide 175. Accordingly, even when the electrode tabs 11 to 14 are fed in an upwardly or downwardly bent state, the electrode tabs 11 to 14 may smoothly enter the passage 177 while sliding on the first tapered portions 172 and the second tapered portions 176.

The first visual guide 171 and the second visual guide 175 are disposed parallel to a feeding direction of the electrode sheet 10. Accordingly, it is possible to suppress the plurality of electrode tabs 11 to 14 from being caught on the first visual guide 171 and the second visual guide 175 when the electrode sheet 10 is fed.

Each time the electrode sheet 10 is fed in an amount as much as the feed pitch MP, the plurality of electrode tabs 11 to 14 enter the visual guide unit 170. The visual guide unit 170 may press the plurality of electrode tabs 11 to 14 to correct the positions of the plurality of electrode tabs 11 to 14 at one time, and the visual unit 150 may photograph the plurality of electrode tabs 11 to 14 at one time.

A method of controlling the notching device of the present invention configured as described above will be described.

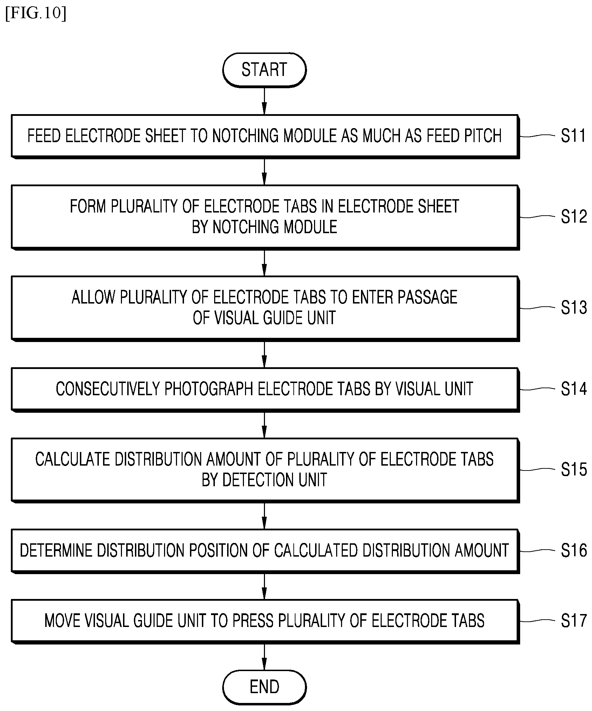

FIG. 10 is a schematic flowchart illustrating a method of controlling a notching device according to the present invention.

Referring to FIG. 10, an electrode sheet 10 is fed to a notching module 140 as much as a feed pitch MP (S11). In this case, the electrode sheet 10 may be fed by controlling the rotational speeds of a unwind roller 120 and a rewind roller 130.

The notching module 140 forms a plurality of electrode tabs 11 to 14 in the electrode sheet 10 (S12). In this case, a plurality of punches are arranged in the notching module 140 in a traveling direction of the electrode sheet 10. The notching module 140 heats and presses one side of the electrode sheet 10 in a width direction to punch the plurality of electrode tabs 11 to 14.

The electrode sheet 10 is fed so that the plurality of electrode tabs 11 to 14 enter a passage 177 of a visual guide unit 170 (S13). In this case, even when the electrode tabs 11 to 14 are fed in an upwardly or downwardly bent state, the electrode tabs 11 to 14 may smoothly enter the passage 177 while sliding on first tapered portions 172 and second tapered portions 176. Therefore, it is possible to prevent the plurality of electrode tabs 11 to 14 from being caught on or sandwiched by a first visual guide 171 and a second visual guide 175.

The visual unit 150 consecutively photographs the electrode tabs 11 to 14 one by one (S14). In this case, when the plurality of electrode tabs 11 to 14 of the electrode sheet 10 are bent or warped upward, images captured by the visual unit 150 are greater than actual electrode tabs 11 to 14 in size, interval, and dimensions. Further, when the plurality of electrode tabs 11 to 14 of the electrode sheet 10 are bent or warped downward, the images captured by the visual unit 150 are smaller than the actual electrode tabs 11 to 14 in size, interval, and dimensions.

The detection unit 160 compares data on the plurality of electrode tabs 11 to 14 photographed by the visual unit 150 with reference data (central value) to calculate a distribution amount D of the plurality of electrode tabs 11 to 14 (S15). The detection unit 160 compares whether fixed value tab pitches of preceding electrode tabs 11 to 13 excluding the most subsequent electrode tab 14 in each electrode tab set TS are distributed in the reference data (central value) to calculate the distribution amount D of the electrode tabs 11 to 14.

For example, when four electrode tabs 11 to 14 are bent or warped upward in the electrode sheet 10, central values of a first tab pitch TP to a third tab pitch TP3 in the electrode sheet 10 are distributed close to a lower limit of a fourth tab pitch TP4. Further, in each electrode tab set TS, the fourth tab pitch TP4 is greater than a reference tab pitch TP, and an interval between a fourth electrode tab 14 of a preceding electrode tab set TS and a first electrode tab (not illustrated) of a following electrode tab set TS is widened as much as the distribution amount D. Therefore, a control unit 180 may misjudge that a region of the following electrode tab set TS starts from a point retracted as much as the distribution amount D.

Further, when four electrode tabs 11 to 14 are bent or warped downward in the electrode sheet 10, central values of a first tab pitch TP1 to a third tab pitch TP3 are distributed close to an upper limit of a fourth tab pitch TP4. In this case, in each electrode tab set TS, the fourth tab pitch TP4 is smaller than the reference tab pitch TP, and an interval between a fourth electrode tab 11 to 14 of a preceding electrode tab set TS and a first electrode tab 11 of a following electrode tab set TS is narrowed as much as the distribution amount D. Therefore, the control unit 180 may misjudge that a region of the following electrode tab set TS starts from a point advanced as much as the distribution amount D.

The control unit 180 determines data received from the detection unit 160 to determine whether the plurality of electrode tabs 11 to 14 are deformed (distribution amount D) (S16).

When the control unit 180 determines the distribution amount D of the plurality of electrode tabs 11 to 14, the visual guide unit 170 is moved upward or downward to press the plurality of electrode tabs 11 to 14 (S17). As the plurality of electrode tabs 11 to 14 are pressurized, positions of the electrode tabs 11 to 14 may be corrected to be almost flat.

Further, when the visual unit 150 photographs a preceding electrode tab set TS in the state in which the positions of the electrode tabs 11 to 14 in the preceding electrode tab set TS are corrected, images of the electrode tab set TS are corrected to be substantially identical or similar to actual electrode tabs 11 to 14 in size, interval, and dimensions.

Accordingly, since an interval between a fourth electrode tab 14 of a preceding electrode tab set TS and a first electrode tab (not illustrated) of a following electrode tab set TS is corrected to be identical to or substantially identical to the reference tab pitch TP, the control unit 180 may feed the electrode sheet 10 to the notching module 140 in an amount as the feed pitch MP. As a result, when the notching module 140 punches a plurality of following electrode tabs (following electrode tab set TS) of the electrode sheet 10, the plurality of following electrode tabs may be formed to have the same interval as the plurality of preceding electrode tabs 11 to 14 (preceding electrode tab set TS).

Meanwhile, since the first visual guide 171 and the second visual guide 175 are simultaneously moved upward or downward, it is possible to prevent the passage 177 from being narrowed or widened. Therefore, even when the visual guide unit 170 is moved, a constant width of the passage 177 is maintained, and thus it is possible to prevent deformed electrode tabs 11 to 14 from being caught on or sandwiched to the visual guide unit 170, and it is possible to prevent the electrode sheet 10 from being broken.

As the processes as described above continue, the electrode tabs 11 to 14 may be consecutively formed on one side of the electrode sheet 10.

Further, the visual unit 150 and the detection unit 160 measure the distribution amount D of the electrode tabs 11 to 14 in real time, and the control unit 180 corrects positions of the electrode tabs 11 to 14 by moving the visual guides as much as the measured distribution amount D. Therefore, intervals between the electrode tabs 11 to 14 formed in the electrode sheet 10 may be constantly maintained.

Accordingly, since an interval between a fourth electrode tab 14 of a preceding electrode tab set TS and a first electrode tab (not illustrated) of a following electrode tab set TS is corrected to be identical to or substantially identical to the reference tab pitch TP, the control unit 180 may feed the electrode sheet 10 to the notching module 140 in an amount as the feed pitch MP. As a result, when the notching module 140 punches a plurality of following electrode tabs (following electrode tab set TS) of the electrode sheet 10, the plurality of following electrode tabs may be formed to have the same interval as the plurality of preceding electrode tabs 11 to 14 (preceding electrode tab set TS).

Meanwhile, since the first visual guide 171 and the second visual guide 175 are simultaneously moved upward or downward, it is possible to prevent the passage 177 from being narrowed or widened. Therefore, even when the visual guide unit 170 is moved, a constant width of the passage 177 is maintained, and thus it is possible to prevent deformed electrode tabs 11 to 14 from being caught on or sandwiched to the visual guide unit 170, and it is possible to prevent the electrode sheet 10 from being broken.

As the processes as described above continue, the electrode tabs 11 to 14 may be consecutively formed on one side of the electrode sheet 10.

Further, the visual unit 150 and the detection unit 160 measure the distribution amount D of the electrode tabs 11 to 14 in real time, and the control unit 180 corrects positions of the electrode tabs 11 to 14 by moving the visual guides as much as the measured distribution amount D. Therefore, intervals between the electrode tabs 11 to 14 formed in the electrode sheet 10 may be constantly maintained.

While the present invention has been described above with reference to the drawings illustrated, the present invention is not limited by the embodiments and drawings disclosed herein, and it should be clear to those skilled in the art that various modifications can be made within the scope of the technical spirit of the present invention. In addition, although the operation effects according to the configuration of the present invention have not been explicitly described in describing of the embodiments of the present invention above, it is natural that the effects predictable by the corresponding configuration should also be acknowledged.

## Claims

1. A notching device (100) comprising:
a notching module (140) configured to form a plurality of electrode tabs (11, 12, 13, 14) on an electrode sheet (10); and
a visual unit (150) configured to capture images of the electrode tabs (11, 12, 13, 14) on the electrode sheet (10);
**characterized in that** the notching device (100) further comprises:
a detection unit (160) configured to compare the captured images with reference data to calculate a distribution pattern of the electrode tabs (11, 12, 13, 14);
a visual guide unit (170) having a passage (177) for the electrode tabs (11, 12, 13, 14) to traverse, the visual guide unit (170) being adjustable to press the electrode tabs (11, 12, 13, 14); and
a control unit (180) configured to adjust a position of the visual guide unit (170) to press the electrode tabs (11, 12, 13, 14) to correct the distribution pattern of the electrode tabs (11, 12, 13, 14).

2. The notching device (100) of claim 1, wherein the visual guide unit (170) includes a first visual guide (171) movably coupled on one side of the electrode tab (11, 12, 13, 14) and a second visual guide (175) movably coupled on the other side of the electrode tab (11, 12, 13, 14), the first visual guide (171) and the second visual guide (175) forming the passage (177).

3. The notching device (100) of claim 2, wherein the first visual guide (171) and the second visual guide (175) are configured to be simultaneously moved to maintain a constant width of the passage (177).

4. The notching device (100) of claim 3, wherein the first visual guide (171) and the second visual guide (175) are spaced apart by a constant interval from portions connected to the electrode sheet (10).

5. The notching device (100) of claim 2, wherein the first visual guide (171) includes tapered portions (172) on both sides thereof, and the second visual guide (175) includes tapered portions (176) on both sides thereof.

6. The notching device (100) of claim 2, wherein the first visual guide (171) and the second visual guide (175) are disposed parallel to a traveling direction of the electrode sheet (10).

7. The notching device (100) of claim 1, wherein the electrode sheet (10) is configured to continuously enter the visual guide unit (170) at a constant speed.

8. The notching device (100) of claim 1, wherein the visual guide unit (170) is configured to be moved up and down.

9. The notching device (100) of claim 1, wherein the detection unit (160) calculates the distribution pattern of the electrode tabs (11, 12, 13, 14) by comparing a fixed value data related to the electrode tabs (11, 12, 13, 14) with a predetermined central value, the fixed value data encompassing all but adjacent electrode tabs (11, 12, 13, 14) in each electrode tab set.

10. The notching device (100) of claim 1, wherein the notching module (140) is configured to form a plurality of electrode tabs (11, 12, 13, 14) at one time.

11. A method of controlling a notching device (100), comprising:
forming a plurality of electrode tabs (11, 12, 13, 14) in an electrode sheet (10) by a notching module (140);
feeding the electrode sheet (10) so that the electrode tabs (11, 12, 13, 14) enter a passage (177) of a visual guide unit (170);
photographing the electrode tabs (11, 12, 13, 14) by a visual unit (150);
comparing the photographed electrode tabs (11, 12, 13, 14) with a reference data and calculating a distribution pattern of the electrode tabs (11, 12, 13, 14) by a detection unit (160); and
moving the visual guide unit (170) to correct the distribution pattern by pressing the electrode tabs (11, 12, 13, 14).

12. The method of claim 11, wherein a first visual guide (171) and a second visual guide (172) of the visual guide unit (170) are simultaneously moved to maintain a constant width of the passage (177).

13. The method of claim 11, wherein the electrode sheet (10) continuously enters the visual guide unit (170) at a constant speed.

14. The method of claim 11, wherein the detection unit (160) calculates the pattern of the electrode tabs (11, 12, 13, 14) by comparing a fixed value data relate to the electrode tabs (11, 12, 13, 14) with a predetermined central value, the fixed value data encompassing all but adjacent electrode tabs in each electrode tab set.

15. The method of claim 11, wherein the notching module (140) forms a plurality of electrode tabs (11, 12, 13, 14) at one time.

## Patentansprüche

1. Kerbvorrichtung (100), umfassend:
ein Kerbmodul (140), welches dazu eingerichtet ist, eine Mehrzahl von Elektrodenlaschen (11, 12, 13, 14) an einer Elektrodenbahn (10) zu bilden; und
eine visuelle Einheit (150), welche dazu eingerichtet ist, Bilder der Elektrodenlaschen (11, 12, 13, 14) an der Elektrodenbahn (10) zu erfassen;
**dadurch gekennzeichnet, dass** die Kerbvorrichtung (100) ferner umfasst:
eine Detektionseinheit (160), welche dazu eingerichtet ist, die erfassten Bilder mit Referenzdaten zu vergleichen, um ein Verteilungsmuster der Elektrodenlaschen (11, 12, 13, 14) zu berechnen;
eine visuelle Führungseinheit (170), welche einen Durchgang (177) aufweist, welchen die Elektrodenlaschen (11, 12, 13, 14) passieren können, wobei die visuelle Führungseinheit (170) einstellbar ist, um gegen die Elektrodenlaschen (11, 12, 13, 14) zu drücken; und
eine Steuereinheit (180), welche dazu eingerichtet ist, eine Position der visuellen Führungseinheit (170) einzustellen, um gegen die Elektrodenlaschen (11, 12, 13, 14) zu drücken, um das Verteilungsmuster der Elektrodenlaschen (11, 12, 13, 14) zu korrigieren.

2. Kerbvorrichtung (100) nach Anspruch 1, wobei die visuelle Führungseinheit (170) eine erste visuelle Führung (171), welche beweglich an einer Seite der Elektrodenlasche (11, 12, 13, 14) gekoppelt ist, und eine zweite visuelle Führung (175) umfasst, welche beweglich an der anderen Seite der Elektrodenlasche (11, 12, 13, 14) gekoppelt ist, wobei die erste visuelle Führung (171) und die zweite visuelle Führung (175) den Durchgang (177) bilden.

3. Kerbvorrichtung (100) nach Anspruch 2, wobei die erste visuelle Führung (171) und die zweite visuelle Führung (175) dazu eingerichtet sind, simultan bewegt zu werden, um eine konstante Breite des Durchgangs (177) beizubehalten.

4. Kerbvorrichtung (100) nach Anspruch 3, wobei die erste visuelle Führung (171) und die zweite visuelle Führung (175) um ein konstantes Intervall von Abschnitten beabstandet sind, welche mit der Elektrodenbahn (10) verbunden sind.

5. Kerbvorrichtung (100) nach Anspruch 2, wobei die erste visuelle Führung (171) an beiden Seiten davon verjüngte Abschnitte (172) umfasst und die zweite visuelle Führung (175) an beiden Seiten davon verjüngte Abschnitte (176) umfasst.

6. Kerbvorrichtung (100) nach Anspruch 2, wobei die erste visuelle Führung (171) und die zweite visuelle Führung (175) parallel zu einer Fortbewegungsrichtung der Elektrodenbahn (10) angeordnet sind.

7. Kerbvorrichtung (100) nach Anspruch 1, wobei die Elektrodenbahn (10) dazu eingerichtet ist, mit einer konstanten Geschwindigkeit kontinuierlich in die visuelle Führungseinheit (170) einzutreten.

8. Kerbvorrichtung (100) nach Anspruch 1, wobei die visuelle Führungseinheit (170) dazu eingerichtet ist, auf und ab bewegt zu werden.

9. Kerbvorrichtung (100) nach Anspruch 1, wobei die Detektionseinheit (160) das Verteilungsmuster der Elektrodenlaschen (11, 12, 13, 14) berechnet, indem sie Festwertdaten, welche sich auf die Elektrodenlaschen (11, 12, 13, 14) beziehen, mit einem vorbestimmten Mittelwert vergleicht, wobei die Festwertdaten in jedem Elektrodenlaschensatz alle außer benachbarte Elektrodenlaschen (11, 12, 13, 14) einschließen.

10. Kerbvorrichtung (100) nach Anspruch 1, wobei das Kerbmodul (140) dazu eingerichtet ist, eine Mehrzahl von Elektrodenlaschen (11, 12, 13, 14) gleichzeitig zu bilden.

11. Verfahren zum Steuern einer Kerbvorrichtung (100), umfassend:
Bilden einer Mehrzahl von Elektrodenlaschen (11, 12, 13, 14) in einer Elektrodenbahn (10) durch ein Kerbmodul (140);
Zuführen der Elektrodenbahn (10), so dass die Elektrodenlaschen (11, 12, 13, 14) in einen Durchgang (177) einer visuellen Führungseinheit (170) eintreten;
Fotografieren der Elektrodenlaschen (11, 12, 13, 14) durch eine visuelle Einheit (150);
Vergleichen der fotografierten Elektrodenlaschen (11, 12, 13, 14) mit Referenzdaten und Berechnen eines Verteilungsmusters der Elektrodenlaschen (11, 12, 13, 14) durch eine Detektionseinheit (160); und
Bewegen der visuellen Führungseinheit (170), um das Verteilungsmuster durch ein Drücken gegen die Elektrodenlaschen (11, 12, 13, 14) zu korrigieren.

12. Verfahren nach Anspruch 11, wobei eine erste visuelle Führung (171) und eine zweite visuelle Führung (172) der visuellen Führungseinheit (170) simultan bewegt werden, um eine konstante Breite des Durchgangs (177) beizubehalten.

13. Verfahren nach Anspruch 11, wobei die Elektrodenbahn (10) mit einer konstanten Geschwindigkeit kontinuierlich in die visuelle Führungseinheit (170) eintritt.

14. Verfahren nach Anspruch 11, wobei die Detektionseinheit (160) das Muster der Elektrodenlaschen (11, 12, 13, 14) berechnet, indem sie Festwertdaten, welche sich auf die Elektrodenlaschen (11, 12, 13, 14) beziehen, mit einem vorbestimmten Mittelwert vergleicht, wobei die Festwertdaten in jedem Elektrodenlaschensatz alle außer benachbarte Elektrodenlaschen einschließen.

15. Verfahren nach Anspruch 11, wobei das Kerbmodul (140) eine Mehrzahl von Elektrodenlaschen (11, 12, 13, 14) gleichzeitig bildet.

## Revendications

1. Dispositif d'entaille (100) comprenant :
un module d'entaille (140) configuré pour former une pluralité de languettes d'électrode (11, 12, 13, 14) sur une feuille d'électrode (10) ; et
une unité visuelle (150) configurée pour capturer des images des languettes d'électrode (11, 12, 13, 14) sur la feuille d'électrode (10) ;
**caractérisé en ce que** le dispositif d'entaille (100) comprend en outre :
une unité de détection (160) configurée pour comparer les images capturées à des données de référence pour calculer un motif de répartition des languettes d'électrode (11, 12, 13, 14) ;
une unité de guidage visuel (170) présentant un passage (177) pour que les languettes d'électrode (11, 12, 13, 14) le traversent, l'unité de guidage visuel (170) étant ajustable pour presser les languettes d'électrode (11, 12, 13, 14) ; et
une unité de commande (180) configurée pour ajuster une position de l'unité de guidage visuel (170) pour presser les languettes d'électrode (11, 12, 13, 14) pour corriger le motif de répartition des languettes d'électrode (11, 12, 13, 14).

2. Dispositif d'entaille (100) selon la revendication 1, dans lequel l'unité de guidage visuel (170) inclut un premier guide visuel (171) couplé de manière mobile d'un côté de la languette d'électrode (11, 12, 13, 14) et un second guide visuel (175) couplé de manière mobile de l'autre côté de la languette d'électrode (11, 12, 13, 14), le premier guide visuel (171) et le second guide visuel (175) formant le passage (177).

3. Dispositif d'entaille (100) selon la revendication 2, dans lequel le premier guide visuel (171) et le second guide visuel (175) sont configurés pour être déplacés simultanément pour maintenir une largeur constante du passage (177).

4. Dispositif d'entaille (100) selon la revendication 3, dans lequel le premier guide visuel (171) et le second guide visuel (175) sont espacés d'un intervalle constant de parties reliées à la feuille d'électrode (10).

5. Dispositif d'entaille (100) selon la revendication 2, dans lequel le premier guide visuel (171) inclut des parties fuselées (172) des deux côtés de celui-ci, et le second guide visuel (175) inclut des parties fuselées (176) des deux côtés de celui-ci.

6. Dispositif d'entaille (100) selon la revendication 2, dans lequel le premier guide visuel (171) et le second guide visuel (175) sont disposés parallèlement à une direction de déplacement de la feuille d'électrode (10).

7. Dispositif d'entaille (100) selon la revendication 1, dans lequel la feuille d'électrode (10) est configurée pour pénétrer en continu dans l'unité de guidage visuel (170) à une vitesse constante.

8. Dispositif d'entaille (100) selon la revendication 1, dans lequel l'unité de guidage visuel (170) est configurée pour être déplacée vers le haut et vers le bas.

9. Dispositif d'entaille (100) selon la revendication 1, dans lequel l'unité de détection (160) calcule le motif de répartition des languettes d'électrode (11, 12, 13, 14) en comparant une donnée de valeur fixe relative aux languettes d'électrode (11, 12, 13, 14) à une valeur centrale prédéterminée, les données de valeur fixe englobant toutes les languettes d'électrode (11, 12, 13, 14) à l'exception des languettes d'électrode adjacentes dans chaque ensemble de languettes d'électrode.

10. Dispositif d'entaille (100) selon la revendication 1, dans lequel le module d'entaille (140) est configuré pour former une pluralité de languettes d'électrode (11, 12, 13, 14) à la fois.

11. Procédé de commande d'un dispositif d'entaille (100), comprenant :
la formation d'une pluralité de languettes d'électrode (11, 12, 13, 14) dans une feuille d'électrode (10) par un module d'entaille (140) ;
l'alimentation de la feuille d'électrode (10) de sorte que les languettes d'électrode (11, 12, 13, 14) pénètrent dans un passage (177) d'une unité de guidage visuel (170) ;
la photographie des languettes d'électrode (11, 12, 13, 14) par une unité visuelle (150) ;
la comparaison des languettes d'électrode (11, 12, 13, 14) photographiées à des données de référence et le calcul d'un motif de répartition des languettes d'électrode (11, 12, 13, 14) par une unité de détection (160) ; et
le déplacement de l'unité de guidage visuel (170) pour corriger le motif de répartition en pressant les languettes d'électrode (11, 12, 13, 14).

12. Procédé selon la revendication 11, dans lequel un premier guide visuel (171) et un second guide visuel (172) de l'unité de guidage visuel (170) sont déplacés simultanément pour maintenir une largeur constante du passage (177).

13. Procédé selon la revendication 11, dans lequel la feuille d'électrode (10) pénètre continuellement dans l'unité de guidage visuel (170) à une vitesse constante.

14. Procédé selon la revendication 11, dans lequel l'unité de détection (160) calcule le motif des languettes d'électrode (11, 12, 13, 14) en comparant des données de valeur fixe relatives aux languettes d'électrode (11, 12, 13, 14) à une valeur centrale prédéterminée, les données de valeur fixe englobant toutes les languettes d'électrode à l'exception des languettes adjacentes dans chaque ensemble de languettes d'électrode.

15. Procédé selon la revendication 11, dans lequel le module d'entaille (140) forme une pluralité de languettes d'électrode (11, 12, 13, 14) à la fois.
